# EUROPÄISCHE PATENTSCHRIFT

(11) **EP 3 260 359 B1**
(45) Veröffentlichungstag und Bekanntmachung des Hinweises auf die Patenterteilung: **03.04.2019**
(21) Anmeldenummer: 17174602.7
(22) Anmeldetag: 06.06.2017
(51) Int. Cl.: B62D 35/00

(54) **WINDLEITELEMENT ZUR MONTAGE AN EINER SEITENWANDVORRICHTUNG FÜR EIN FAHRZEUG**
WIND GUIDANCE ELEMENT TO BE MOUNTED ON A SIDEWALL FOR A VEHICLE
ÉLÉMENT DÉFLECTEUR D'AIR DESTINÉ À ÊTRE MONTÉ SUR UN DISPOSITIF DE PAROI LATÉRALE POUR UN VÉHICULE AUTOMOBILE

(30) Priorität: 23.06.2016 DE 102016007704
(43) Veröffentlichungstag der Anmeldung: 27.12.2017
(73) Patentinhaber: MAN Truck & Bus AG, 80995 München (DE)
(72) Erfinder: Kopp, Stephan, 83623 Ascholding (DE); Mohr, Roger, 82256 Fürstenfeldbruck (DE)
(74) Vertreter: v. Bezold & Partner Patentanwälte - PartG mbB

(56) Entgegenhaltungen:
- DE-A1- 2 548 109
- DE-C1- 4 014 577
- JP-U- S5 791 676
- JP-U- S62 151 192

## Beschreibung

Die Erfindung betrifft eine Anordnung mit einem an einer Seitenwandvorrichtung angeordneten Windleitelement für ein Fahrzeug, wobei das Windleitelement insbesondere zur Verbesserung des Luftwiderstandes und/oder zur Reduzierung der Fahrzeugeigenverschmutzung dient.

Zum Stand der Technik können zunächst die JP S62 151 192 U, die JP S57 91676, die DE 25 48 109 A1 und die DE 40 14 577 C1 genannt werden. Die JP S62 151 192 U offenbart die Merkmale des Oberbegriffs des Anspruchs 1.

Kraftfahrzeuge werden aus Komfort- und Effizienzgründen zunehmend mit Windleitelementen ausgerüstet. Windleitelemente sind oftmals an der Kraftfahrzeugfront montiert und dienen dazu, den Fahrtwind (Luftströmung) um die Fahrzeugecken zu führen, so dass der Luftwiderstand reduziert wird. Die Windleitelemente sind dabei üblicherweise an der Ecke des Übergangs von der Kraftfahrzeugfront zu der Kraftfahrzeugseitenwand angebracht und enden üblicherweise mit dem vorderen Beginn der Kraftfahrzeug-Seitentüre.

Eine Aufgabe der Erfindung ist es, eine Anordnung zu schaffen, mit dem die Eigenverschmutzung eines Fahrzeuges, insbesondere eines Türgriffs einer Fahrzeug-Seitentüre, reduziert werden kann und vorzugsweise zugleich eine verbesserte Fahrtwindaerodynamik erzielbar ist.

Diese Aufgabe wird mit den Merkmalen des Hauptanspruchs gelöst. Vorteilhafte Weiterbildungen der Erfindung können den Unteransprüchen und der folgenden Beschreibung bevorzugter Ausführungsformen der Erfindung entnommen werden.

Die Erfindung schafft eine Anordnung mit einem zweckmäßig ein- oder mehrteiligen Windleitelement und einer Seitenwandvorrichtung (z. B. Fahrzeugseitenwand) für ein Fahrzeug. Das Windleitelement verläuft zweckmäßig zumindest abschnittsweise an, insbesondere auf, der Seitenwandvorrichtung. Es ist vorzugsweise an der Seitenwandvorrichtung montiert.

Das Windleitelement kann vorzugsweise z. B. eine aus der Senkrechten (zweckmäßig Höhenrichtung) abweichende Dachfläche und/oder vorzugsweise zumindest eine Seitenfläche aufweisen.

Das Fahrzeug kann z. B. ein Nutzfahrzeug sein, insbesondere ein Omnibus oder ein Lastkraftwagen oder zumindest ein Fahrerhaus hierfür.

Die Anordnung zeichnet sich insbesondere dadurch aus, dass sich eine Längsachse des Windleitelements im Wesentlichen horizontal erstreckt. Alternativ oder ergänzend zeichnet sich die Anordnung insbesondere dadurch aus, dass das Windleitelement ausgebildet und angeordnet ist, um Fahrtwind auf und/oder unter einen Türgriff der Seitenwandvorrichtung, z. B. einen Türgriff einer Fahrzeug-Seitentüre, zu lenken. Dadurch kann zweckmäßig eine Beeinträchtigung, insbesondere Verschmutzung, des Türgriffs durch aufwirbelnden Schmutz (z. B. Wasser, Schnee, Dreck, Gischt, etc.) zumindest reduziert werden. Der aufwirbelnde Schmutz kann dabei z. B. von einem Radkasten des Fahrzeugs oder einer Straßenfläche stammen.

Das Windleitelement dient also insbesondere dazu, eine durch Fahrtwind bewirkte Luftströmung auf und/oder unter den Türgriff zu lenken, wodurch insbesondere eine Luft-Schutzbarriere erzeugt werden kann, um im Wesentlichen zu verhindern, dass (z. B. von einem Radkasten oder der Straßenfläche) aufwirbelnder Schmutz (z. B. Wasser, Schnee, Dreck, Gischt, etc.) zum Türgriff gelangt.

Die Dachfläche des Windleitelements ist einerseits zweckmäßig strömungsoptimiert ausgeführt und kann eine luftleitende Funktion übernehmen, gewährleistet vorzugsweise zusätzlich allerdings auch eine Reduzierung der Fahrzeugverschmutzung durch Witterungs- und/oder Verschmutzungseinflüsse (z. B. Regenwasser, Spritzwasser, Schnee, Dreck, Schmutz, Gischt, etc.).

Die Seitenfläche des Windleitelements kann ebenfalls eine luftleitende Funktion übernehmen, vorzugsweise so, dass eine reduzierte Verschmutzungs- und/oder Schnee-/Wasserablagerungsneigung und/oder eine verbesserte Fahrtwindaerodynamik (Strömungsverhalten, Luftwiderstand, etc.) erzielt werden kann.

Die Kombination einer zweckmäßig oberen Dachfläche und einer Seitenfläche zu einem Windleitelement kann insbesondere eine reduzierte Strömungsablösung an der Seitenwandvorrichtung ermöglichen, so dass dadurch z. B. die Fahrtwindanströmung für die Seitenwandvorrichtung und/oder die Fahrtwindaerodynamik allgemein verbessert werden kann.

Die vorzugsweise relativ zur Längsrichtung des Fahrzeugs längliche Ausführung des Windleitelements kann zweckmäßig genutzt werden, um den Fahrtwind zu einem z. B. in der Fahrzeug-Türe montierten Türgriff zu lenken, um diesen im Wesentlichen frei von Schmutz zu halten.

Die Seitenwandvorrichtung kann z. B. eine Fahrzeug-Türe (zweckmäßig Fahrzeug-Seitentüre) umfassen und/oder einen Bereich unter einer Fahrzeug-Türe, z. B. einen Einstiegsbereich für die Fahrzeug-Türe, mit vorzugsweise einer oder mehreren Stufen.

Die Fahrzeug-Türe kann zweckmäßig mit oder ohne Einstiegsverkleidung ausgeführt sein.

Die Fahrzeug-Türe dient vorzugsweise dazu, dass das Fahrzeug durch Personen betreten und verlassen werden kann. Die Fahrzeug-Türe kann z. B. einen oder mehrere Öffnungswinkel ermöglichen, um einen komfortablen Einstieg in das Fahrzeug bzw. Ausstieg aus dem Fahrzeug zu ermöglichen.

Die Fahrzeug-Türe kann wie üblich einen zweckmäßig hinteren, insbesondere auf- und zuschwenkbaren Endbereich aufweisen.

Es ist möglich, dass das Windleitelement an (z. B. auf) der Fahrzeug-Türe angeordnet ist oder unter der Fahrzeug-Türe angeordnet ist, so dass sich das Windleitelement zweckmäßig auf oder unter der Fahrzeug-Türe erstrecken kann. Vorzugsweise erfolgt die Befestigung des Windleitelements an der Fahrzeug-Türe oder im Bereich unter der Fahrzeug-Türe.

Das Windleitelement, insbesondere die Dachfläche und/oder die Seitenfläche, kann durch einen vorderen, zweckmäßig zur Fahrzeugfront weisenden Kantenbereich und einen hinteren, zweckmäßig zum Fahrzeugheck weisenden Kantenbereich begrenzt werden.

Es ist möglich, dass zumindest eines von Folgenden zumindest abschnittsweise von der Seitenwandvorrichtung insbesondere seitlich absteht: die Dachfläche, die Seitenfläche, der vordere Kantenbereich und/oder der hintere Kantenbereich.

Das Windleitelement ist vorzugsweise einstückig ausgebildet, z. B. aus einem einstückig-integralen, die Dachfläche und die Seitenfläche umfassenden Bauteil.

Die Dachfläche weicht aus der Senkrechten und vorzugsweise der Horizontalen ab und/oder erstreckt sich nach seitlich unten, z. B. schräg, gekrümmt oder gekantet.

Es ist möglich, dass die Seitenfläche sich von der Dachfläche zweckmäßig seitlich nach unten erstreckt, z. B. schräg, gekrümmt oder gekantet. Die Dachfläche und die Seitenfläche bilden im Querschnitt eine im Wesentlichen L-Form aus. Die L-Form und insbesondere der Übergang deren Schenkel kann z. B. orthogonal, gekrümmt, schräg oder einfach oder mehrfach gekantet ausgeführt sein.

Das Windleitelement kann über eine zweckmäßige Montageeinrichtung, insbesondere einen oder mehrere Befestigungsflansche, an die Seitenwandvorrichtung montiert werden. Es ist möglich, dass eine Längsachse der Montageeinrichtung sich im Wesentlichen horizontal erstreckt, z. B. mit einer Abweichung von kleiner oder gleich +/-20°, +/-15°, +/-10° oder +/-5° relativ zur Horizontalen, insbesondere Horizontalebene.

Die Montageinrichtung, insbesondere der zumindest eine Befestigungsflansch, kann einstückig-integraler Teil des Windleitelements sein, z. B. gekantet oder gebogen aus der Dachfläche. Das Windleitelement und der zumindest eine Befestigungsflansch sind folglich vorzugsweise nicht aneinander montiert, sondern können aus ein und demselben Bauteil ausgebildet werden.

Es ist möglich, dass das Windleitelement seitlich bündig und/oder im Wesentlichen dicht (z. B. im Wesentlichen geschlossen für Wasser, Schmutz, etc.) mit der Seitenwandvorrichtung verbunden ist, z. B. entlang seiner im Wesentlichen gesamten Längserstreckung, mittels der Montageeinrichtung und/oder indem die Dachfläche vorzugsweise bis an die Seitenwandvorrichtung herangeführt ist.

Das Windleitelement, z. B. die Dachfläche, kann einen Lotuseffekt aufweisendes Material umfassen. Dabei kann das Windleitelement aus einem Lotus-Effekt aufweisenden Material hergestellt sein oder z. B. mit einer einen Lotus-Effekt aufweisenden Beschichtung versehen sein.

Es ist möglich, dass die Dachfläche und/oder die Seitenfläche in einem Winkelbereich zwischen 90° und kleiner 180° relativ zur Senkrechten zweckmäßig nach seitlich unten hin abfällt. Die Längsachse des Windleitelements kann sich insbesondere mit einer Abweichung von kleiner oder gleich +/-20°, +/-15°, +/-10° oder +/-5° relativ zur Horizontalen (zweckmäßig Horizontalebene) im Wesentlichen horizontal erstrecken.

Es ist möglich, dass zwischen dem Windleitelement, insbesondere der Dachfläche und/oder der Seitenfläche, und einem Teilabschnitt der Seitenwandvorrichtung ein Windkanal ausgebildet wird, insbesondere zur Kanalisierung des Fahrtwindes, so dass sich vorzugsweise der Windkanal unter dem Windleitelement, insbesondere der Dachfläche, und über dem Teilabschnitt erstrecken kann.

Der Teilabschnitt erstreckt sich vorzugsweise nach seitlich außen (zweckmäßig schräg oder gekrümmt abfallend oder im Wesentlichen horizontal). Der Teilabschnitt ist vorzugsweise in dem Bereich unter der Fahrzeug-Türe ausgebildet. Der Teilabschnitt kann z. B. aus der Seitenwandvorrichtung selbst herausgeformt sein oder an die Seitenwandvorrichtung z. B. als Anbauteil anmontiert sein.

Es ist möglich, dass eine Einlassöffnung des Windkanals im Übergangsbereich zwischen der Seitenwandvorrichtung und der Front des Fahrzeugs angeordnet ist und/oder sich der Durchlassquerschnitt des Windkanals in Richtung des Fahrwinds zumindest abschnittsweise verjüngt, also insbesondere nach hinten bzw. zum Heck des Fahrzeugs.

Der Windkanal ist vorzugsweise oben durch die Dachfläche des Windleitelements und, zumindest teilweise, unten durch den Teilabschnitt, und z. B., zumindest teilweise, zur einen Seite durch die Seitenfläche des Windleitelements und z. B. zur anderen Seite durch die Seitenwandvorrichtung begrenzbar. Der Windkanal kann demnach zweckmäßig nach seitlich außen und/oder unten teilweise offen ausgebildet sein, obwohl z. B. auch ein in Umfangsrichtung geschlossener Windkanal im Rahmen der Erfindung möglich ist.

Die Anordnung kann z. B. einen Radkasten (z. B. Radhaus, Radlauf oder Kotflügel) aufweisen und das Windleitelement kann insbesondere ausgebildet und angeordnet sein, um Fahrtwind über den Radkasten zu lenken, vorzugsweise zwischen den Radkasten und den Türgriff zu lenken. Dadurch kann zweckmäßig ein Aufwirbeln (Aufspritzen) von Schmutz an den Türgriff verhindert oder zumindest reduziert werden.

Der Radkasten ist vorzugsweise ein Radkasten einer Fahrzeugvorderachse, insbesondere der vordersten Fahrzeugachse.

Das Windleitelement kann sich vorzugsweise zumindest abschnittsweise hinter einer Front des Fahrzeugs, vor dem Radkasten, über dem Radkasten und/oder vor dem hinteren Endbereich der Fahrzeug-Türe erstrecken.

Es ist möglich, dass vor dem Windleitelement, vorzugsweise an der Front des Fahrzeugs, zumindest ein weiteres Windleitelement angeordnet ist, um Fahrtwind zum Windleitelement zu lenken, wodurch die Effizienz des Windleitelements vergrößert werden kann.

Wie schon zuvor erwähnt, ist es möglich, dass sich die Längsachse des Windleitelements im Wesentlichen horizontal erstreckt. Das Merkmal "im Wesentlichen horizontal" umfasst im Rahmen der Erfindung vorzugsweise eine Abweichung von kleiner oder gleich +/- 20°, +/-15°, +/-10° oder +/-5-relativ zur Horizontalen und/oder z. B. eine oder mehrere Krümmungen innerhalb dieses Winkelbereichs.

Dadurch, dass die Längsachse des Windleitelements sich im Wesentlichen horizontal erstreckt, kann das Windleitelement relativ zur Längsrichtung des Fahrzeugs vorzugsweise länglich ausgeführt werden.

Das Windleitelement, dessen Längsachse, und/oder der Windkanal kann sich im Wesentlichen horizontal erstrecken, zweckmäßig zumindest abschnittsweise oder im Wesentlichen insgesamt geradlinig oder gekrümmt, z. B. ohne Richtungswechsel oder mit Richtungswechsel.

Die Dachfläche und/oder Seitenfläche des Windleitelements können zweckmäßig schräg, eben und/oder konkav ausgeformt sein.

Das Windleitelement kann aus Kunststoff oder zumindest einem kunststoffartigen Material oder einem metallischen Material ausgeführt sein.

Mittels des Windleitelements kann vorzugsweise eine durch Fahrtwind bewirkte, zweckmäßig konzentrierte Luft-Schutzbarriere auf und/oder unter dem Türgriff erzeugt werden, um vorzugsweise im Wesentlichen zu verhindern, dass (z. B. von einem Radkasten oder der Straßenfläche) aufwirbelnder Schmutz zum Türgriff (z. B. Wasser, Schnee, Dreck, Gischt, etc.) gelangt.

In der Ausführungsform, in der die Luft-Schutzbarriere den Türgriff erfasst, erzeugt die Luft-Schutzbarriere vorzugsweise zugleich eine Reinigungswirkung auf den Türgriff, z. B. indem Schmutz (z. B. Wasser, Dreck, Schnee, etc.) mitgerissen und somit vom Türgriff entfernt wird.

Der vordere Kantenbereich kann vorzugsweise im Übergangsbereich zwischen der Seitenwandvorrichtung und der Front des Fahrzeugs positioniert werden.

Die Seitenwandvorrichtung kann zweckmäßig ein oder mehrere Karosseriebauteile umfassen und z. B. aus Stahl oder Kunststoff hergestellt sein. Alternativ oder ergänzend kann die Seitenwandvorrichtung ein oder mehrere zweckmäßige Anbauteile aufweisen.

Die Erfindung ist nicht auf eine Anordnung wie hierin beschrieben beschränkt, sondern umfasst auch ein Fahrzeug mit zumindest einer solchen Anordnung.

Im Rahmen der Erfindung kann das Fahrzeug als Fahrerhaus, z. B. noch ohne Räder und/oder ohne Fahrwerk, ausgeführt sein. Das Fahrzeug ist vorzugsweise ein Nutzfahrzeug, insbesondere ein Omnibus oder ein Lastkraftwagen oder zumindest ein Fahrerhaus hierfür.

Besonderes bevorzugt kann die Seitenwandvorrichtung Teil eines Fahrerhaus für eine Sattelzugmaschine sein.

Die vorstehend beschriebenen Merkmale und Ausführungsformen der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen in Verbindung mit den beigefügten Figuren.
- Figur 1: zeigt eine stark schematische perspektivische Ansicht einer Anordnung gemäß einer Ausführungsform der Erfindung,
- Figur 2: zeigt eine Anordnung nebst schematischer Wirkungsweise gemäß einer Ausführungsform der Erfindung, und
- Figur 3: zeigt eine Detailansicht der Figur 2.

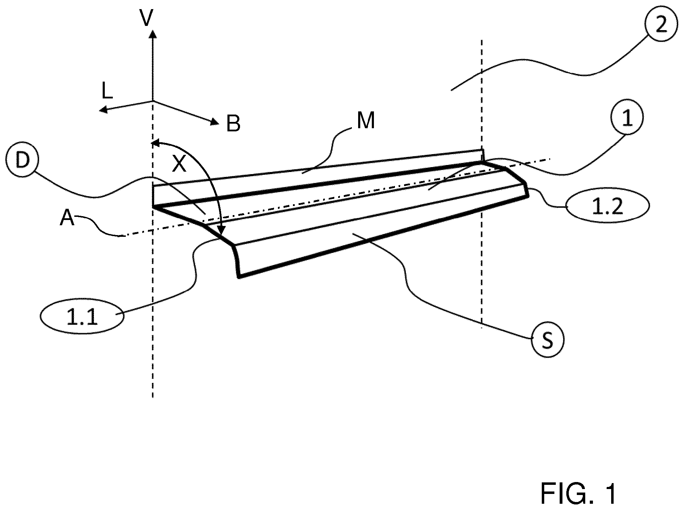

Figur 1 zeigt eine schematische perspektivische Ansicht einer Anordnung gemäß einer Ausführungsform der Erfindung.

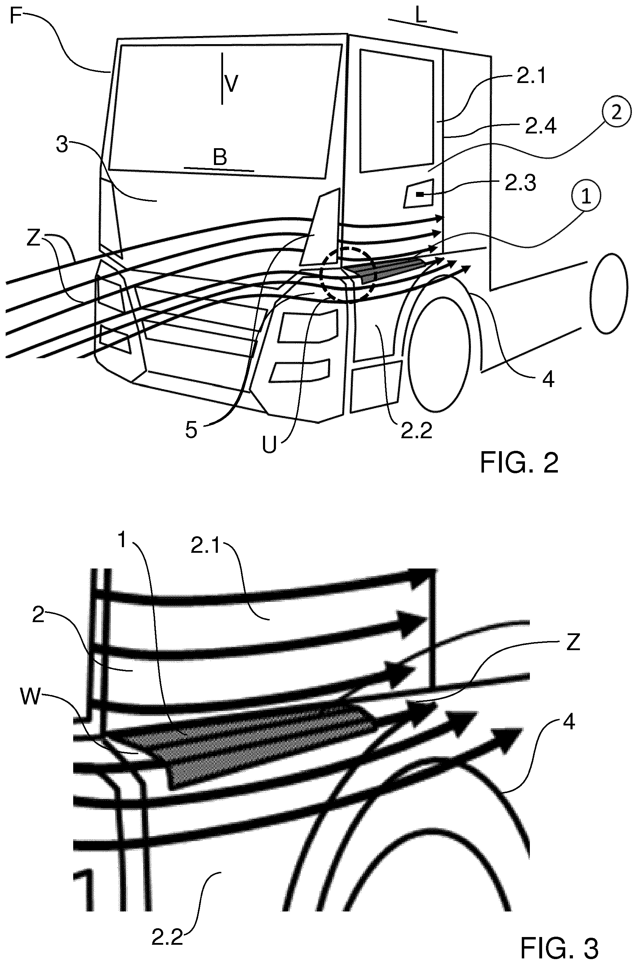

Die Anordnung umfasst ein Windleitelement 1 und eine Seitenwandvorrichtung (Fahrzeugseitenwand) 2 für ein Fahrzeug F (Figur 2). Bezugszeichen B kennzeichnet die Breitenrichtung des Fahrzeugs F, Bezugszeichen L die Längsrichtung des Fahrzeugs F und Bezugseichen V die Senkrechte, also die Höhenrichtung des Fahrzeugs F.

Das Windleitelement 1 ist an der Seitenwandvorrichtung 2 angeordnet und umfasst eine Dachfläche D und zumindest eine Seitenfläche S. Die Seitenfläche S erstreckt sich von der Dachfläche D aus zweckmäßig nach unten. Die Dachfläche D und vorzugsweise die Seitenfläche S weichen aus der Senkrechten V und der Horizontalen, die zweckmäßig durch die Längsrichtung L und die Breitenrichtung B aufgespannt werden kann, ab und zwar insbesondere so, dass sie seitlich nach unten abfallen. Dadurch bilden die Dachfläche D und die Seitenfläche S im Querschnitt eine im Wesentlichen L-Form aus.

Die Seitenwandvorrichtung 2 kann unter Bezugnahme auf Figur 2 eine insbesondere öffen- und schließbare Fahrzeug-Türe 2.1 und einen Bereich 2.2 unter der Fahrzeug-Türe 2.1 aufweisen, z. B. umfassend einen Einstiegsbereich zur Fahrzeug-Türe 2.1 mit vorzugsweise einer oder mehreren Stufen. Die Fahrzeug-Türe 2.1 umfasst außerdem insbesondere einen Türgriff 2.3, über den die Fahrzeug-Türe 2.1 geöffnet und geschlossen werden kann. Die Fahrzeug-Türe 2.1 umfasst ferner einen hinteren, wie üblich auf- und zuschwenkbaren Endbereich 2.4.

Unter erneuter Bezugnahme auf die Figur 1 erstreckt sich eine Längsachse A des Windleitelements 1 im Wesentlichen horizontal (mit einer Abweichung von maximal +/- 20° relativ zur Horizontalebene) und insbesondere im Wesentlichen in Längsrichtung L des Fahrzeugs F.

Das Windleitelement 1 wird durch einen vorderen Kantenbereich 1.1 und einen hinteren Kantenbereich 1.2 begrenzt und ist so ausgebildet und angeordnet, dass die Dachfläche D, die Seitenfläche S, der vordere Kantenbereich 1.1 und/oder der hintere Kantenbereich 1.2 von der Seitenwandvorrichtung 2 nach seitlich außen absteht.

Der vordere Kantenbereich 1.1 ist zweckmäßig relativ zum Fahrzeug F nach vorne gerichtet, während der hintere Kantenbereich 1.2 zweckmäßig relativ zum Fahrzeug F nach hinten gerichtet ist.

Das Windleitelement 1 umfasst außerdem eine Montageeinrichtung M, insbesondere zumindest einen Befestigungsflansch M, über die es an die Seitenwandvorrichtung 2 montiert ist. Der Befestigungsflansch M erstreckt sich ebenfalls im Wesentlichen horizontal, ebenfalls mit einer Abweichung von maximal +/- 20° relativ zur Horizontalen, insbesondere Horizontalebene.

Das Windleitelement 1 ist seitlich bündig mit der Seitenwandvorrichtung 2 verbunden, so dass es nach oben im Wesentlichen dicht an die Seitenwandvorrichtung 2 anschließt, vorzugsweise mittels des Befestigungsflansches M und/oder indem die Dachfläche D bis an die Seitenwandvorrichtung 2 herangeführt wird.

Das Windleitelement 1 ist einstückig ausgebildet, insbesondere aus einem einstückigintegralen, die Dachfläche D, die Seitenfläche S und den Befestigungsflansch M umfassenden Bauteil.

Die Dachfläche D kann in einem Winkelbereich X zwischen 90° und kleiner 180° relativ zur Senkrechten V seitlich nach unten abfallen.

Krümmungen des Windleitelements 1 bzw. dessen Längsachse A sind durchaus vorstellbar, insbesondere in der horizontalen Längsrichtung.

Figur 2 zeigt eine Anordnung gemäß einer Ausführungsform der Erfindung, wobei die Anordnung im Wesentlichen der Anordnung der Figur 1 entspricht und an einem Fahrzeug F, insbesondere einem Fahrerhaus einer Sattelzugmaschine angeordnet ist. Figur 2 kann außerdem die Wirkungsweise der Anordnung entnommen werden.

Figur 2 zeigt wie bereits zuvor angesprochen, dass die Seitenwandvorrichtung 2 eine Fahrzeug-Türe 2.1 mit einem hinteren Endbereich 2.4, einen Bereich 2.2 unter der Fahrzeug-Türe 2.1 und einen Türgriff 2.3 für die Fahrzeug-Türe 2.1 aufweisen kann. Figur 2 zeigte ferner einen vorderen Radkasten 4 (z. B. Kotflügel, Radlauf oder Radhaus).

Bezugszeichen Z kennzeichnet den Fahrtwind und dessen Richtung (Luft-/Fahrtwindströmung) insbesondere um eine Ecke der Front 3 des Fahrzeugs F und entlang des Windleitelements 1 in Richtung Heck des Fahrzeugs F.

Der vordere Kantenbereich 1.1, der der Übersichtlichkeit halber in Figur 2 mit keinem Bezugszeichen versehen ist, ist vorzugsweise im Übergangsbereich U zwischen der Seitenwandvorrichtung 2 und der Front 3 des Fahrzeugs F positioniert.

Vor dem Windleitelement 1 ist an der Front 3 des Fahrzeugs F zumindest ein weiteres Windleitelement 5 angeordnet, um Fahrtwind Z zum Windleitelement 1 zu lenken.

Das Windleitelement 1 ist so ausgebildet und angeordnet, dass sich einerseits dessen Längsachse A im Wesentlichen horizontal (mit einer Abweichung von maximal +/- 20° relativ zur Horizontalebene) erstreckt und andererseits so, dass Fahrtwind Z auf und/oder unter den Türgriff 2.3 lenkbar ist.

Insbesondere ist das Windleitelement 1 so ausgebildet und angeordnet ist, dass der Fahrtwind Z über den Radkasten 4 gelenkt wird, vorzugsweise zwischen den Radkasten 4 und den Türgriff 2.3.

Das Windleitelement 1 erstreckt sich hierbei zumindest abschnittsweise hinter der Front 3 des Fahrzeugs F, vor und über dem Radkasten 4 sowie vor dem hinteren Endbereich 2.4 der Fahrzeug-Türe 2.1.

Durch das Windleitelement 1 kann das Strömungsverhalten insbesondere gegenüber einer vertikalen Ausrichtung und einem in sich geschlossenen Strömungskanal verbessert werden, die Strömungsablösung an der Seitenwandvorrichtung 2 reduziert werden und das Anhaften von Schmutz, Wasser, Schnee etc. auf der Seitenwandvorrichtung 2 verringert werden, insbesondere im Bereich über und hinter dem Windleitelement 1.

Dadurch, dass das Windleitelement 1 ausgebildet und angeordnet ist, um Fahrtwind Z von der Front 3 des Fahrzeugs F aufzufangen und so zu führen und zu leiten, dass Schmutz oder Wasser vom Radhaus 4 nicht oder nur stark reduziert nach oberhalb des Windleitelements 1 transportiert wird, kann die Eigenverschmutzung im insbesondere sensiblen Bereich des Türgriffs 2.3 zumindest reduziert werden.

Figur 2 kann entnommen werden, dass durch das Windleitelement 1 eine durch Fahrtwind Z bewirkte Luft-Schutzbarriere unter dem Türgriff 2.3 erzeugbar ist, um im Wesentlichen zu verhindern, dass insbesondere vom Radkasten 4 oder der Straßenfläche aufwirbelnder Schmutz (z. B. Wasser, Schnee, Dreck, Gischt, etc.) zum Türgriff 2.3 gelangt. In einer nicht gezeigten alternativen oder ergänzenden Ausführungsform kann durch das Windleitelement 1 eine durch Fahrtwind Z bewirkte Luft-Schutzbarriere auf den Türgriff 2.3 erzeugt werden, so dass die Luft-Schutzbarriere den Türgriff 2.3 erfasst, wodurch vorteilhaft eine Reinigungswirkung auf den Türgriff 2.3 bewirkt wird, indem Schmutz (z. B. Wasser, Dreck, Schnee, etc.) mitgerissen und somit vom Türgriff 2.3 entfernt wird.

Figur 3 zeigt eine Detailansicht der Figur 2.

Figur 3 ist insbesondere zu entnehmen, dass zwischen dem Windleitelement 1, insbesondere der Dachfläche D, und einem nach seitlich außen ausgebildeten Teilabschnitt der Seitenwandvorrichtung 2, insbesondere des Bereichs 2.2 unter der Fahrzeug-Türe 2.1, ein Windkanal W ausgebildet wird, zur Kanalisierung des Fahrtwinds Z.

Der Windkanal W wird oben durch die Dachfläche D, unten durch den Teilabschnitt, zur einen Seite durch die Seitenfläche S und zur anderen Seite durch die Seitenwandvorrichtung 2 begrenzt. Der Windkanal W ist zweckmäßig nach oben geschlossen, ansonsten kann er in Umfangsrichtung teilweise offen oder geschlossen ausgebildet werden.

Das Windleitelement 1, die Längsachse A und/oder der Windkanal W können geradlinig oder zweckmäßig leicht gekrümmt ausgeführt sein, so dass sie sich mit oder ohne Richtungswechsel erstrecken können.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Wind-/Luftleitelement
- A: Längsachse des Windleitelements
- D: Dachfläche
- S: Seitenfläche
- M: Montageeinrichtung, insbesondere Befestigungsflansch
- 1.1: Zweckmäßig vorderer Kantenbereich
- 1.2: Zweckmäßig hinterer Kantenbereich
- X: Winkelbereich
- W: Windkanal
- 2: Seitenwandvorrichtung (Fahrzeugseitenwand)
- 2.1: Fahrzeug-Türe
- 2.2: Bereich unter Fahrzeug-Türe, z. B. umfassend einen Einstiegsbereich
- 2.3: Türgriff
- 2.4: Hinterer, vorzugsweise auf- und zuschwenkbarer Endbereich der Fahrzeug-Türe
- F: Fahrzeug
- 3: Front des Fahrzeugs
- 4: Radkasten, z. B. Radhaus oder Radlauf
- 5: Zusätzliches Windleitelement
- U: Übergangsbereich
- B: Breitenrichtung des Fahrzeugs
- L: Längsrichtung des Fahrzeugs
- V: Senkrechte, insbesondere Höhenrichtung des Fahrzeugs
- Z: Fahrtwind (Luftströmung) und/oder Richtung des Fahrwinds

## Patentansprüche

1. Anordnung mit einem Windleitelement (1) und einer Seitenwandvorrichtung (2) für ein Fahrzeug (F), wobei das Windleitelement (1) entlang der Seitenwandvorrichtung (2) verläuft und eine Dachfläche (D) und zumindest eine Seitenfläche (S) aufweist, wobei
a) sich eine Längsachse (A) des Windleitelements (1) im Wesentlichen horizontal erstreckt, und/oder
b) das Windleitelement (1) ausgebildet und angeordnet ist, um Fahrtwind (Z) auf oder unter einen Türgriff (2.3) der Seitenwandvorrichtung (2) zu lenken, so dass vorzugsweise eine Beeinträchtigung des Türgriffs (2.3) durch aufwirbelnden Schmutz zumindest reduzierbar ist,
**dadurch gekennzeichnet, dass**
die Dachfläche (D) aus der Senkrechten (V) abweicht und/oder sich nach seitlich unten erstreckt, und
die Dachfläche (D) und die Seitenfläche (S) im Querschnitt eine im Wesentlichen L-Form ausbilden.

2. Anordnung nach Anspruch 1, **dadurch gekennzeichnet, dass** die Seitenwandvorrichtung (2) eine Fahrzeug-Türe (2.1) umfasst und das Windleitelement (1) an der Fahrzeug-Türe (2.1) oder im Bereich (2.2) unter der Fahrzeug-Türe (2.1) angeordnet und vorzugsweise befestigt ist.

3. Anordnung nach Anspruch 1 oder 2, **dadurch gekennzeichnet, dass** das Windleitelement (1) durch einen vorderen Kantenbereich (1.1) und einen hinteren Kantenbereich (1.2) begrenzt wird.

4. Anordnung nach einem der vorhergehenden Ansprüche, **dadurch gekennzeichnet, dass** zumindest eines von Folgenden zumindest abschnittsweise von der der Seitenwandvorrichtung (2) absteht:
- die Dachfläche (D),
- die Seitenfläche (S),
- der vordere Kantenbereich (1.1),
- der hintere Kantenbereich (1.2).

5. Anordnung nach einem der vorhergehenden Ansprüche, **dadurch gekennzeichnet, dass** die Seitenfläche (S) sich von der Dachfläche (D) nach unten erstreckt.

6. Anordnung nach einem der vorhergehenden Ansprüche, **dadurch gekennzeichnet, dass** das Windleitelement (1) mittels einer Montageeinrichtung (M) in Form zumindest eines Befestigungsflansches an die Seitenwandvorrichtung (2) montiert ist und der Befestigungsflansch einstückig-integraler Teil des Windleitelements (1) ist.

7. Anordnung nach einem der vorhergehenden Ansprüche, **dadurch gekennzeichnet, dass** das Windleitelement (1) seitlich bündig und/oder nach oben im Wesentlichen dicht mit der Seitenwandvorrichtung (2) verbunden ist, vorzugsweise mittels der Montageeinrichtung (M) und/oder indem die Dachfläche (D) bis an die Seitenwandvorrichtung (2) herangeführt ist.

8. Anordnung nach einem der vorhergehenden Ansprüche, **dadurch gekennzeichnet, dass**
- die Dachfläche (D) in einem Winkelbereich (X) zwischen 90° und kleiner 180° relativ zur Senkrechten (V) nach seitlich unten abfällt, und/oder
- sich die Längsachse (A) des Windleitelements (1) mit einer Abweichung von kleiner oder gleich +/-20°, +/-15°, +/-10° oder +/-5° relativ zur Horizontalen im Wesentlichen horizontal erstreckt.

9. Anordnung nach einem der vorhergehenden Ansprüche, **dadurch gekennzeichnet, dass** zwischen dem Windleitelement (1), vorzugsweise der Dachfläche (D) und/oder der Seitenfläche (S), und einem nach seitlich außen erstreckenden Teilabschnitt der Seitenwandvorrichtung (2) ein Windkanal (W) ausgebildet wird.

10. Anordnung nach Anspruch 9, **dadurch gekennzeichnet, dass** eine Einlassöffnung des Windkanals (W) im Übergangsbereich zwischen der Seitenwandvorrichtung (2) und der Front (3) des Fahrzeugs (F) angeordnet ist und/oder sich der Durchlassquerschnitt des Windkanals (W) in Richtung des Fahrwinds (S) zumindest abschnittsweise verjüngt.

11. Anordnung nach einem der vorhergehenden Ansprüche, **dadurch gekennzeichnet, dass** die Anordnung einen Radkasten (4) aufweist und das Windleitelement (1) angeordnet ist, um Fahrtwind (Z) über den Radkasten (4) zu lenken, vorzugsweise zwischen den Radkasten (4) und den Türgriff (2.3) zu lenken.

12. Anordnung nach einem der vorhergehenden Ansprüche, **dadurch gekennzeichnet, dass** das Windleitelement (1) sich zumindest abschnittsweise
- hinter einer Front (4) des Fahrzeugs (F) erstreckt,
- vor einem Radkasten (4) vorzugsweise einer vordersten Fahrzeugachse erstreckt,
- über einem Radkasten (4) vorzugsweise einer vordersten Fahrzeugachse erstreckt, und/oder
- vor einem hinteren Endbereich (2.4) der Fahrzeug-Türe (2.1) erstreckt.

13. Anordnung nach einem der vorhergehenden Ansprüche, **dadurch gekennzeichnet, dass** vor dem Windleitelement (1) zumindest ein weiteres Windleitelement (5) angeordnet ist, um Fahrtwind (Z) zum Windleitelement (1) zu lenken.

14. Anordnung nach einem der vorhergehenden Ansprüche, **dadurch gekennzeichnet, dass** mittels des Luftleitelements (1) eine durch Fahrtwind (Z) bewirkte Luft-Schutzbarriere auf und/oder unter dem Türgriff (2.3) erzeugbar ist.

15. Fahrzeug (F), insbesondere Sattelzugmaschine, mit zumindest einer Anordnung nach einem der vorhergehenden Ansprüche.

## Claims

1. An arrangement with a wind guidance element (1) and a side wall device (2) for a vehicle (F), wherein the wind guidance element (1) runs along the side wall device (2) and has a roof surface (D) and at least one side surface (S), wherein
a) a longitudinal axis (A) of the wind guidance element (1) extends substantially horizontally, and/or
b) the wind guidance element (1) is designed and arranged to direct relative wind (Z) onto or under a door handle (2.3) of the side wall device (2), and therefore an impairment of the door handle (2.3) by dirt swirling up can preferably at least be reduced,
**characterized in that** the roof surface (D) deviates from the vertical (V) and/or extends laterally downwards, and
the roof surface (D) and the side surface (S) form a substantially L shape in cross section.

2. The arrangement according to Claim 1, **characterized in that** the side wall device (2) comprises a vehicle door (2.1) and the wind guidance element (1) is arranged on, and preferably fastened to, the vehicle door (2.1) or in the region (2.2) under the vehicle door (2.1).

3. The arrangement according to Claim 1 or 2, **characterized in that** the wind guidance element (1) is bounded by a front edge region (1.1) and a rear edge region (1.2).

4. The arrangement according to one of the preceding claims, **characterized in that** at least one of the following protrudes at least in sections from the side wall device (2) :
- the roof surface (D),
- the side surface (S),
- the front edge region (1.1),
- the rear edge region (1.2).

5. The arrangement according to one of the preceding claims, **characterized in that** the side surface (S) extends downwards from the roof surface (D).

6. The arrangement according to one of the preceding claims, **characterized in that** the wind guidance element (1) is mounted on the side wall device (2) by means of a mounting means (M) in the form of at least one fastening flange, and the fastening flange is an integral part of the wind guidance element (1).

7. The arrangement according to one of the preceding claims, **characterized in that** the wind guidance element (1) is connected to the side wall device (2) in a laterally flush and/or upwardly substantially tight manner, preferably by means of the mounting means (M) and/or by the roof surface (D) being brought as far as the side wall device (2) .

8. The arrangement according to one of the preceding claims, **characterized in that**
- the roof surface (D) drops laterally downwards within an angular range (X) of between 90° and less than 180° relative to the vertical (V), and/or
- the longitudinal axis (A) of the wind guidance element (1) extends substantially horizontally relative to the horizon with a deviation of less than or equal to +/-20°, +/-15°, +/-10° or +/-5°.

9. The arrangement according to one of the preceding claims, **characterized in that** a wind duct (W) is formed between the wind guidance element (1), preferably the roof surface (D) and/or the side surface (S), and a laterally outwardly extending partial portion of the side wall device (2).

10. The arrangement according to Claim 9, **characterized in that** an inlet opening of the wind duct (W) is arranged in the transition region between the side wall device (2) and the front (3) of the vehicle (F), and/or the passage cross section of the wind duct (W) tapers at least in sections in the direction of the head wind (S).

11. The arrangement according to one of the preceding claims, **characterized in that** the arrangement has a wheel house (4) and the wind guidance element (1) is arranged to direct relative wind (Z) over the wheel house (4), preferably to direct same between the wheel house (4) and the door handle (2.3) .

12. The arrangement according to one of the preceding claims, **characterized in that** the wind guidance element (1) at least in sections
- extends behind a front (4) of the vehicle (F),
- extends in front of a wheel house (4) preferably of a frontmost vehicle axle,
- extends over a wheel house (4) preferably of a frontmost vehicle axle, and/or
- extends in front of a rear end region (2.4) of the vehicle door (2.1).

13. The arrangement according to one of the preceding claims, **characterized in that** at least one further wind guidance element (5) is arranged in front of the wind guidance element (1) in order to direct relative wind (Z) to the wind guidance element (1) .

14. The arrangement according to one of the preceding claims, **characterized in that** an air protection barrier brought about by relative wind (Z) can be produced on and/or under the door handle (2.3) by means of the air guidance element (1).

15. A vehicle (F), in particular semitrailer tractor, with at least one arrangement according to one of the preceding claims.

## Revendications

1. Agencement comprenant un élément déflecteur d'air (1) et un dispositif de paroi latérale (2) pour un véhicule (F), l'élément déflecteur d'air (1) s'étendant le long du dispositif de paroi latérale (2) et présentant une surface de toit (D) et au moins une surface latérale (S),
a) un axe longitudinal (A) de l'élément déflecteur d'air (1) s'étendant essentiellement horizontalement, et/ou
b) l'élément déflecteur d'air (1) étant réalisé et disposé de manière à dévier le vent relatif (Z) sur ou sous une poignée de porte (2.3) du dispositif de paroi latérale (2) de telle sorte que la poignée de porte (2.3) soit de préférence au moins moins affectée par les tourbillons de saleté accumulés,
**caractérisé en ce que**
la surface de toit (D) s'écarte de la verticale (V) et/ou s'étend latéralement vers le bas, et
la surface de toit (D) et la surface latérale (S) constituent en section transversale une forme essentiellement en L.

2. Agencement selon la revendication 1, **caractérisé en ce que** le dispositif de paroi latérale (2) comprend une porte de véhicule (2.1) et l'élément déflecteur d'air (1) est disposé et de préférence fixé à la porte de véhicule (2.1) ou dans la région (2.2) en dessous de la porte de véhicule (2.1).

3. Agencement selon la revendication 1 ou 2, **caractérisé en ce que** l'élément déflecteur d'air (1) est limité par une région d'arête avant (1.1) et une région d'arête arrière (1.2).

4. Agencement selon l'une quelconque des revendications précédentes, **caractérisé en ce qu'**au moins l'un des éléments suivants fait saillie au moins en partie depuis le dispositif de paroi latérale (2) :
- la surface de toit (D),
- la surface latérale (S),
- la région d'arête avant (1.1),
- la région d'arête arrière (1.2).

5. Agencement selon l'une quelconque des revendications précédentes, **caractérisé en ce que** la surface latérale (S) s'étend vers le bas depuis la surface de toit (D).

6. Agencement selon l'une quelconque des revendications précédentes, **caractérisé en ce que** l'élément déflecteur d'air (1) est monté au moyen d'un dispositif de montage (M) en forme d'au moins une bride de fixation sur le dispositif de paroi latérale (2) et la bride de fixation fait partie intégrante d'une seule pièce de l'élément déflecteur d'air (1).

7. Agencement selon l'une quelconque des revendications précédentes, **caractérisé en ce que** l'élément déflecteur d'air (1) est connecté latéralement en affleurement et/ou vers le haut essentiellement hermétiquement avec le dispositif de paroi latérale (2), de préférence au moyen du dispositif de montage (M) et/ou par le fait que la surface de toit (D) est avancée jusqu'au dispositif de paroi latérale (2).

8. Agencement selon l'une quelconque des revendications précédentes, **caractérisé en ce que**
- la surface de toit (D) descend latéralement vers le bas dans une plage angulaire (X) comprise entre 90° et moins de 180° par rapport à la verticale (V), et/ou
- l'axe longitudinal (A) de l'élément déflecteur d'air (1) s'étend essentiellement horizontalement avec un écart par rapport à l'horizontale inférieur ou égal à ±20°, ±15°, ±10° ou ±5°.

9. Agencement selon l'une quelconque des revendications précédentes, **caractérisé en ce qu'**entre l'élément déflecteur d'air (1), de préférence la surface de toit (D) et/ou la surface latérale (S), et une portion partielle s'étendant latéralement vers l'extérieur du dispositif de paroi latérale (2), est réalisé un couloir de vent (W) .

10. Agencement selon la revendication 9, **caractérisé en ce que** l'ouverture d'entrée du couloir de vent (W) est disposée dans la région de transition entre le dispositif de paroi latérale (2) et l'avant (3) du véhicule (F) et/ou la section transversale de passage du couloir de vent (W) se rétrécit au moins en partie dans la direction du vent debout (S).

11. Agencement selon l'une quelconque des revendications précédentes, **caractérisé en ce que** l'agencement présente un passage de roue (4) et l'élément déflecteur d'air (1) est disposé de manière à dévier le vent relatif (Z) par-dessus le passage de roue (4), de préférence entre le passage de roue (4) et la poignée de porte (2.3).

12. Agencement selon l'une quelconque des revendications précédentes, **caractérisé en ce que** l'élément déflecteur d'air (1) s'étend au moins en partie
- derrière un avant (4) du véhicule (F),
- devant un passage de roue (4) de préférence d'un essieu avant du véhicule,
- par-dessus un passage de roue (4), de préférence d'un essieu avant du véhicule, et/ou
- devant une région d'extrémité arrière (2.4) de la porte du véhicule (2.1).

13. Agencement selon l'une quelconque des revendications précédentes, **caractérisé en ce qu'**au moins un élément déflecteur d'air supplémentaire (5) est disposé devant l'élément déflecteur d'air (1), afin de dévier le vent relatif (Z) vers l'élément déflecteur d'air (1).

14. Agencement selon l'une quelconque des revendications précédentes, **caractérisé en ce qu'**au moyen de l'élément déflecteur d'air (1), une barrière de protection à l'air causé par le vent relatif (Z) peut être réalisée sur et/ou sous la poignée de porte (2.3).

15. Véhicule (F), en particulier véhicule tracteur de semi-remorque, comprenant au moins un agencement selon l'une quelconque des revendications précédentes.
